(19) Europäisches Patentamt
European Patent Office
Office européen des brevets

(11) Numéro de publication: **0 323 928 A1**

(12) # DEMANDE DE BREVET EUROPEEN

(21) Numéro de dépôt: **89400012.4**

(51) Int. Cl.$^4$: **H 04 L 11/18**

(22) Date de dépôt: **03.01.89**

(30) Priorité: **08.01.88 FR 8800139**

(43) Date de publication de la demande:
**12.07.89 Bulletin 89/28**

(84) Etats contractants désignés: **BE DE GB IT NL**

(71) Demandeur: **LMT RADIO PROFESSIONNELLE**
**46-47, Quai Alphonse Le Gallo**
**F-92103 Boulogne-Billancourt (FR)**

(72) Inventeur: **Judeinstein, André**
**THOMSON-CSF SCPI 19, avenue de Messine**
**F-75008 Paris (FR)**

**Fevrier, Laurent**
**THOMSON-CSF SCPI 19, avenue de Messine**
**F-75008 Paris (FR)**

(74) Mandataire: **Courtellemont, Alain et al**
**THOMSON-CSF SCPI**
**F-92045 PARIS LA DEFENSE CEDEX 67 (FR)**

(54) **Procédé et dispositif de commutation d'un paquet de données.**

(57) L'invention se rapporte à l'envoi, par un diffuseur, de messages, à l'aide de paquets fléchés, dans un réseau de communication comprenant des noeuds de commutation.

Le paquet est élaboré par le diffuseur (E11) de manière à parcourir un trajet le conduisant successivement dans tous les noeuds (N2, N4) où se trouvent des abonnés (R21-R23, R41, R42) auxquels est destiné le message contenu dans le paquet ; à l'arrivée dans un tel noeud une flèche suivie d'instructions et placée juste après la flèche qui a permis d'atteindre le noeud considéré, désigne un serveur de diffusion qui, en fonction des instructions, effectue la diffusion locale du message et permet au paquet de poursuivre son trajet. Les flèches et les instructions sont éliminées du paquet, en cours de trajet, dès qu'elles ont fini de servir.

Application à la commutation de paquets de données.

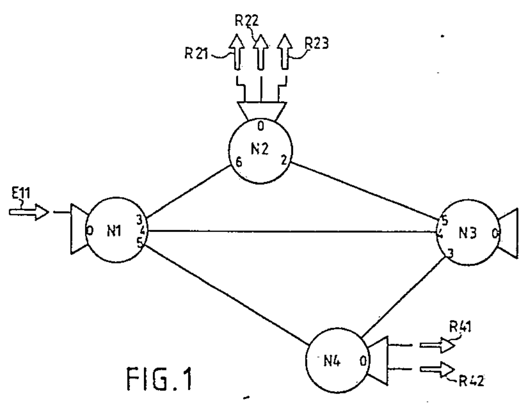


FIG.1

EP 0 323 928 A1

**Description**

## PROCEDE ET DISPOSITIF DE COMMUTATION D'UN PAQUET DE DONNEES.

La présente invention se rapporte à un procédé et à un dispositif de commutation d'un paquet entre un émetteur et des récepteurs.

Il est à noter que, dans ce qui suit, le terme abonné sera souvent préféré au terme récepteur et que le terme diffusé représentera un abonné désigné pour recevoir un message contenu dans le paquet.

Dans ce document il est fait appel aux notions d'épine dorsale, de flèche et de paquet fléché, dans le domaine de la transmission de paquets.

Une diffusion est dite être effectuée par une épine dorsale, ou le long d'une épine dorsale, lorsque la diffusion des données se fait en parcourant un trajet avec, dans ce trajet, des points d'éclatement où les données sont diffusées localement.

Une flèche est un numéro de code placé dans un paquet et utilisé, par exemple par un commutateur, pour diriger le paquet vers une de ses sorties ; cette flèche est effeuillée, c'est à dire retirée du paquet, dès qu'elle a été utilisée. Les paquets munis de flèches, aussi appelés paquets fléchés, ont été conçus pour effectuer une liaison point à point, c'est à dire entre un émetteur et un seul récepteur ; les flèches, dont est muni le paquet au moment de son élaboration, indiquent le trajet à suivre, dans le réseau, entre l'émetteur et le récepteur. La technique des paquets fléchés permet une commutation très rapide et se prête donc à tous les types d'applications : téléphonie, transmission de données en temps réel, etc...; de tels paquets sont utilisés dans la demande de brevet européen 0006798.

Jusqu'alors, du fait même de leur conception initiale, les paquets fléchés n'avaient pas été employés pour la diffusion à des destinataires multiples puisque, comme il a été vu plus avant, ils étaient prévus seulement pour une liaison point à point.

Le but de la présente invention est de proposer un procédé de commutation rapide d'un paquet de données entre un émetteur et une multitude de récepteurs ou diffusés, en évitant de provoquer des pointes de trafic sur les artères comme dans le cas où les communications destinées aux divers diffusés sont établies indépendamment les unes des autres mais transmises simultanément.

Ceci est obtenu en utilisant des paquets fléchés de conception nouvelle.

Selon l'invention un procédé de commutation d'un paquet de données le long d'une épine dorsale d'un réseau de communication comprenant des noeuds de commutation, utilisant un paquet fléché comportant des flèches ordinaires de guidage noeud à noeud, est caractérisé en ce qu'il consiste à effectuer, à partir de certains noeuds de l'épine dorsale, une diffusion locale de données vers des diffusés et pour cela, à placer, dans le paquet, après chacune des flèches ordinaires qui font aboutir le paquet dans un noeud où doit être effectuée une diffusion locale de données vers des diffusés, une autre flèche et des informations, cette autre flèche désignant un serveur de diffusion propre au noeud auquel a fait aboutir la flèche ordinaire qui précède l'autre flèche considérée et ces informations étant de trois types : une désignation d'une zone du serveur contenant une liste de diffusés, des données à faire parvenir aux diffusés, un protocole d'utilisation de ces données.

La présente invention sera mieux comprise et d'autres caractéristiques apparaîtront à l'aide de la description ci-après et des figures s'y rapportant qui représentent :

- la figure 1, le schéma simplifié d'un réseau de communication ;
- la figure 2, un exemple de composition d'un paquet fléché selon l'art connu ;
- la figure 3, les compositions successives d'un premier type de paquet fléché selon l'invention ;
- les figures 4, 5 et 6, des schémas plus détaillées d'éléments de la figure 1 dans le cas d'utilisation de paquets selon la figure 3 ;
- la figure 7, les compositions successives d'un second type de paquet fléché selon l'invention ;
- les figures 8 et 9, des schémas plus détaillés d'éléments de la figure 1 dans le cas d'utilisation de paquets selon la figure 7.

Sur les différentes figures les éléments correspondants sont désignés par les mêmes repères.

Dans les différents schémas les dispositifs détaillés utilisés pour effectuer les traitements des paquets et relevant de la technologie courante, n'ont pas été représentés en vue de rendre les dessins plus clairs et de simplifier l'exposé. Par contre les traitements à effectuer sont précisés dans l'exposé.

La figure 1 est une vue partielle d'un réseau comprenant des noeuds de commutation dont quatre, N1 à N4, apparaissent sur la figure ; ces noeuds sont interconnectés, selon une structure maillée, par des artères où les communications sont multiplexées ; le type de multiplexage employé n'intervenant pas dans la compréhension de l'invention ne sera pas précisé. Chaque noeud de commutation comporte un commutateur qui, lui-même, comporte dans les exemples qui vont être décrits, neuf points de raccordement pour les artères. Ces points de raccordement, identifiés par des numéros allant de 0 à 8, comportent chacun une entrée et une sortie ; l'artère relative au point 0 est utilisée pour le trafic se terminant localement dans le noeud, tel que le trafic des abonnés raccordés au noeud ou que le trafic d'échange de signalisation entre l'organe de commande du noeud et les organes de commande des noeuds voisins.

L'exemple décrit considère un diffuseur de paquets, E11, qui désire envoyer un même message vers trois diffusés, R21 à R23, associés au noeud N2 et deux diffusés, R41, R42, associés au noeud N4 ; chacun de ces cinq diffusés est symbolisé par une flèche.

Pour envoyer son message le diffuseur E11 pourrait établir cinq communications indépendantes à tour de rôle, ce qui entraînerait une durée totale de transmission importante ; il pourrait aussi envoyer simultanément cinq messages vers les cinq diffusés, ce qui suppose que les cinq diffusés soient simultanément libres, et présente le risque de provoquer des pointes de trafic sur les artères. Pour envoyer son message le diffuseur E11 pourrait aussi utiliser les services d'un centre de commutation, situé dans le réseau, qui stockerait le message et le retransmettrait vers les cinq diffusés ; un tel centre a l'inconvénient de présenter un très gros trafic sortant. Pour envoyer son message le diffuseur E11 peut également, comme cela va être décrit ci-après, utiliser une fonction distribuée de diffusion, dans laquelle les données sont acheminées sur une épine dorsale qui relie entre eux les noeuds auxquels sont raccordés le diffuseur et les diffusés ; chacun des noeuds auxquels est raccordé un ou plusieurs diffusés assure une diffusion locale, par exemple du noeud N2 vers R21, R22 et R23.

La figure 2 montre quel format il est connu de donner à un paquet d'informations pour une liaison point à point.

Les paquets successifs sont séparés par des fanions constitués par le code "01111110", ce code ne peut jamais être rencontré en dehors des fanions grâce à l'insertion après tout groupe de cinq "1" consécutif d'un "0" dit de transparence, selon la procédure définie par la norme ISO 3309. Ces "0" de transparence sont éliminés, par la suite, des données transmises entre fanions.

Le paquet débute par un champ d'adressage constitué par une suite de flèches qui servent à guider le paquet de proche en proche. Lorsque le paquet entre dans un noeud de commutation, la flèche qui est en tête indique le numéro de l'artère par laquelle il doit sortir du noeud. Cette flèche est "effeuillée" par le commutateur. Lorsque la flèche de tête est à "0" cela signifie que le paquet est arrivé au noeud du destinataire, le champ suivant donne alors son adresse locale.

Dans un système multi-service, dans lequel le traitement final subi par les données dépend de l'application, un dernier champ de commande donne la référence du protocole applicable.

Après ces champs d'entête le paquet contient les données utilisateur complétées éventuellement de données auxiliaire exigées par le protocole (numéro d'ordre, séquence de contrôle de trame, etc...)

Cette technique a l'avantage de permettre de confier l'aiguillage des paquets à un automate matériel, donc très rapide, ce qui permet d'atteindre un flux très important et un temps de transit très court, compatible notamment avec l'application téléphonique.

Cette technique est bien adaptée à la réalisation de liaisons point à point. Ce qui suit va montrer comment il est possible de l'adapter à la réalisation de connexions fourchues, c'est à dire comprenant des points d'éclatement nécessaires à la fonction de diffusion.

Une première réalisation va être décrite à l'aide des figures 3 à 6 et une seconde à l'aide de la figure 6 et des figures 7 à 9.

La figure 3, qui se subdivise en figures 3a à 3h, représente l'évolution d'un paquet spécialement conçu pour une commutation le long d'une épine dorsale. Sur les figures 3a à 3h les fanions ont été représentés par des zones hachurées.

La figure 3a représente le paquet au moment de sa création par le diffuseur E11. Il comporte, dans son champ d'adressage trois catégories de flèches :

- des flèches ordinaires utilisées, comme dans les paquets selon la figure 2, pour guider le paquet de noeud en noeud ; dans l'exemple décrit ces flèches ont une valeur comprise entre 0 et 7 et leur représentation en binaire commence par un zéro ; sur la figure 3 ces flèches de quatre bits sont notées "0,3", "0,2", "0,0";
- des couples formés d'une flèche de diffusion et d'une liste de diffusion ; la flèche de diffusion désigne, dans l'exemple décrit, le point de raccordement numéro 8, noté "1,0", auquel est connecté un serveur de diffusion, comportant seize sous-serveurs et qui sera décrit plus en détail dans ce qui suit ; la liste de diffusion D1 (ou D2) désigne un parmi les seize sous-serveurs.

Les figures 4 et 5, dont la description sera reprise plus loin au sujet des échanges d'informations, montrent le noeud N2 de la figure 1 dans le cas de la première réalisation.

Le noeud comporte un commutateur avec son point de raccordement 0 relié, par une artère, à une unité de jonction classique qui comporte successivement : une interface 17, un bus 16 et différents joncteurs d'abonnés dont certains, référencés de 11 à 13, sont raccordés à des abonnés R21, R22, R23 qui sont ceux de la liste de diffusion considérée et dont les autres, tels que 14, sont raccordés à des abonnés, non représentés sur la figure 5, qui ne sont pas dans la liste de diffusion considérée. Le commutateur du noeud N2 a ses points de raccordement 2 et 6 couplés respectivement par une artère au noeud N3 de la figure 1 et par une autre artère au noeud N1 de la figure 1, et son point de raccordement 8 relié par une artère au serveur de diffusion dont il vient d'être question plus avant.

La figure 6 est une vue plus détaillée du serveur des figures 4 et 5. Ce serveur comporte un organe de traitement des données avec un circuit de liaison, ou interface, connecté à l'artère provenant du point de raccordement 0 du commutateur. Le serveur comporte également un ensemble de mémoires, M, formé par les seize sous-serveurs mentionnés plus avant ; chaque sous-serveur comporte une zone mémoire de paquet et une zone mémoire de liste dans laquelle sont stockées les adres ses des diffusés destinataires du paquet dans le noeud N2. Les autres noeuds du réseau sont constitués de manière semblable.

Un retour à la figure 3 permet d'étudier le cheminement d'un paquet contenant les informations émises par le diffuseur E11 de la figure 1 et destinées à faire parvenir un message aux diffusés.

La figure 3a montre le paquet au moment de son arrivée dans le commutateur du noeud N1 ; il comporte successivement :

- des fanions figurés par des hachures,
- une flèche ordinaire marquée "0,3" sur la figure 3a, qui commence par un "0" et désigne au paquet le point de sortie 3 du commutateur du noeud N1 ; cette flèche est effeuillée par ce commutateur qui transmet ensuite le paquet selon la figure 3b ;
- une flèche de diffusion, marquée "1,0" sur la figure 3a, qui se distingue des flèches ordinaires par le fait qu'elle commence par un "1" et qui, à l'arrivée dans le commutateur du noeud N2 où elle est effeuillée (figure 3c), désigne au paquet le point de raccordement 8 du commutateur sur lequel est connecté le serveur de diffusion des figures 4 à 6 ;
- une liste de diffusion, marquée "D1" sur la figure 3a, désigne un parmi les seize sous-serveurs; cette liste est effeuillée à son l'arrivée dans l'organe de traitement du serveur (figure 3d)
- une flèche ordinaire, marquée 0,2 sur la figure 3a, qui désigne au paquet le point de raccordement 2 du commutateur du noeud N2 ; cette flèche est effeuillée par ce commutateur qui transmet le paquet selon la figure 3e ;
- une flèche ordinaire marquée "0,3" sur la figure 3a, qui est effeuillée par le commutateur du noeud N3 (figure 3f) dont elle désigne le point de raccordement 3 ;
- une flèche de diffusion, marquée "1,0" sur la figure 3a, effeuillée par le commutateur du noeud N4 (figure 3g) dont elle désigne le point de raccordement 8 sur lequel est connecté un serveur de diffusion semblable à celui des figures 4 à 6 ;
- une liste de diffusion, marquée "D2" sur la figure 3a, qui désigne, dans le serveur du noeud N4, un parmi les seize sous-serveurs et est effeuillée dans le serveur (figure 3h) ;
- une flèche ordinaire, marquée "0,0" sur la figure 3a, qui désigne le point de raccordement 0 du commutateur du noeud N4 sur lequel est raccordée uneunité de jonction semblable à celle des figures 4 et 5;
- une adresse locale inexistante dans l'unité de jonction du noeud N4, qui permet de faire disparaître le paquet qui, comme il va ressortir de ce qui suit, a fourni, à l'aide des serveurs de diffusion des noeuds N2 et N4, son message aux diffusés R21 à R23 et R41, R42 ;
- un champ de commande qui, comme dans un paquet selon l'art connu, indique le protocole à appliquer en fonction de la nature de l'application ;
- un champ de données utilisateur complétées éventuellement de données auxiliaires exigées par le protocole (numéro d'ordre, séquence de trame, etc...);
- des fanions figurés par des hachures.

Pour que le paquet puisse être acheminé comme il vient d'être indiqué et que, en même temps, le message du paquet puisse être envoyé aux diffusés, le serveur de diffusion, tel que celui des figures 4 et 6, effectue les tâches suivantes :

- il reçoit le numéro de sous-serveur et l'effeuille; - il reçoit tout le reste du paquet et le stocke dans la zone mémoire de paquet du sous-serveur ;
- il émet des paquets fléchés :
- le paquet stocké dans la zone mémoire est émis, via le commutateur, par l'artère indiquée par la première flèche rencontrée ; cette première flèche est effeuillée par le commutateur,
- des paquets en nombre égal au nombre de diffusés dont l'adresse est contenue dans la zone mémoire de liste du sous-serveur ; chacun de ces paquets comporte une flèche désignant l'artère reliée au point de raccordement 0, une des adresses contenues dans la zone de mémoire de liste, le champ de commande et le champ de données utilisateur ; ces paquets parviennent aux diffusés locaux via le commutateur et l'unité de jonction.

Les figures 4 et 5 montrent les trajets suivis par ces paquets dans le cas du noeud N2 de la figure 1.

La figure 4 montre, par une flèche noire, que le paquet provenant du diffuseur via le point de raccordement 6, arrive au serveur où il est mis en mémoire, M, et retransmis, via le point de raccordement 2, vers le noeud N3. La figure 5 montre, par trois flèches noires, que les paquets élaborés dans le serveur sont transmis, via l'unité de jonction, aux diffusés R21 à R23 ; dans l'exemple décrit les diffusés R21 à R23 émettent, vers le diffuseur E11 de la figure 1, via le point de raccordement 6, des paquets d'accusé de réception.

La figure 7, qui se subdivise en figures 7a à 7c, montre, dans la seconde réalisation, l'évolution d'un autre type de paquet conçu pour une commutation le long d'une épine dorsale. Sur cette figure les fanions ont été représentés par des zones hachurées.

Les figures 7a à 7c montrent les informations placées en tête de paquet, à un moment donné, pour permettre la diffusion du message.

La figure 7a représente le paquet au moment de sa création par le diffuseur E11 de la figure 1. Il comporte une entête avec successivement :

- une flèche ordinaire marquée, "3" sur la figure, désigne au paquet le point de raccordement 3 du commutateur du noeud N1 ; cette flèche est effeuillée par ce commutateur ; le paquet est ainsi acheminé vers le commutateur du noeud N2 ;
- une flèche ordinaire marquée "0" qui désigne au paquet le point de raccordement 0 du commutateur du noeud N2, qui est effeuillée par le commutateur du noeud N2 et qui permet l'acheminement du paquet vers une unité de jonction représentée sur les figures 8 et 9. Cette unité de jonction correspond à l'unité de jonction des figures 4 et 5 avec, en plus, intégration d'un serveur de diffusion, 15, dont la structure est semblable, au nombre de sous-serveurs près (8 et non 16 dans l'exemple décrit), à celle du serveur selon la figure 6 mais dont le rôle, légèrement différent, sera précisé plus loin ;

- une liste locale, D1 composée du même nombre n de chiffres binaires qu'une adresse locale,qui désigne dans le serveur de l'unité de jonction du noeud N2, un parmi $2^n$ = huit sous-serveurs ; ces sous-serveurs, comme dans l'exemple précédent de réalisation, comportent une mémoire de liste de diffusés et une mémoire de paquet ; la mémoire de liste contient, là encore, la liste des diffusés locaux ;
- un code de diffusion qui indique que le protocole, dont l'activation est demandée, est
  - la diffusion du message vers les diffusés locaux ; la figure 7c va montrer où se trouve ce message qui est aussi appelé données utilisateur ;
  - l'émission d'un nouveau paquet vers l'étape suivante de l'épine dorsale, à savoir vers les noeuds N3 puis N4 ;
- une zone de données qui est constituée par la totalité du paquet selon la figure 7b, fanions non compris ; c'est cette zone qui est stockée dans la mémoire de paquet du sous-serveur mentionné ci-avant.

La figure 7b représente le paquet au moment où il va partir du noeud N2 pour effectuer l'étape noeud N2-noeud N4 via le noeud N3. L'entête de ce paquet est semblable à l'entête du paquet selon la figure 7a à la différence près qu'elle comporte une flèche de plus, indiquée "3", pour assurer le passage, sans diffusion locale, du noeud N3.

La figure 7c représente le paquet qui permet le déballage complet des données utilisateur. Ce paquet qui est constitué par la totalité de la zone des données du paquet selon la figure 7b comporte :

- une flèche ordinaire "0" ;
- une adresse locale ;
- une zone de commande d'application qui donne le protocole à appliquer, c'est-à-dire qui dit comment le message doit être traité par les utilisateurs que sont les diffusés R21-R31, R41 et R42 ;
- les données utilisateur, c'est-à-dire le message destiné à tous les diffusés.

Le sous-serveur de diffusion désigné par la "liste locale" dispose ainsi, dans ses mémoires, de la liste des diffusés locaux et de la zone "données" (selon la figure 7a pour le noeud N2 ou selon la figure 7b pour le noeud N4) ; son rôle est d'envoyer vers le réseau tout le paquet après avoir effeuillé la liste locale et le "code diffusion", c'est à dire d'envoyer vers le réseau toute la zone "données". Le rôle du sous-serveur est également d'envoyer vers les diffusés locaux le code d'application et les données utilisateur qu'il reconnaît au fait qu'ils sont immédiatement derrière une flèche "0" suivie d'une adresse locale et d'un code de commande et non plus du code de diffusion.

Les figures 8 et 9 illustrent le rôle du sous-serveur désigné par la "liste locale" dans le serveur 15. La figure 8 montre le trajet suivi par le paquet arrivant par le point de raccordement 6 dans le noeud N2 où il est pris en compte par le serveur de l'unité de jonction qui le retransmet dans le réseau par le point de raccordement 2. La figure 9 montre l'envoi des données utilisateur d'une part et de la commande d'application d'autre part, vers les diffusés désignés par la liste locale du sous-serveur.

L'invention n'est pas limitée aux exemples décrits ; c'est ainsi que dans la seconde réalisation il peut être prévu, comme illustré par la figure 5 dans le cadre de la première réalisation, d'émettre des paquets d'accusé de réception. De même des paquets du type selon la figure 3 peuvent être utilisés avec des serveurs situés à l'intérieur de l'unité de jonction et des paquets selon la figure 7 peuvent être utilisés avec des serveurs extérieurs à l'unité de jonction ; les modifications à apporter à ces paquets portent simplement sur les trajets à parcourir par ces paquets et donc sur les flèches qu'ils doivent contenir pour accéder aux serveurs en fonction des points de raccordement sur lesquels ils sont branchés. Et, bien sûr, un même réseau peut comporter plusieurs diffuseurs différents, chaque diffuseur pouvant transmettre à son choix vers différents ensembles de diffusés.

## Revendications

1. Procédé de commutation d'un paquet de données le long d'une épine dorsale d'un réseau de communication comprenant des noeuds de commutation, ce procédé utilisant un paquet fléché comportant des flèches ordinaires de guidage noeud à noeud, caractérisé en ce qu'il consiste à effectuer, à partir de certains noeuds de l'épine dorsale, une diffusion locale de données vers des diffusés et pour cela, à placer, dans le paquet, après chacune des flèches ordinaires qui font aboutir le paquet dans un noeud où doit être effectuée une diffusion locale de données vers des diffusés, une autre flèche et des informations, cette autre flèche désignant un serveur de diffusion propre au noeud auquel a fait aboutir la flèche ordinaire qui précède l'autre flèche considérée et ces informations étant de trois types :une désignation d'une zone du serveur contenant une liste de diffusés, des données à faire parvenir aux diffusés, un protocole d'utilisation de ces données.

2. Dispositif pour la mise en oeuvre du procédé selon la revendication 1, comportant un réseau de communication avec des noeuds (N1-N4) munis chacun d'un commutateur, caractérisé en ce qu'il comporte, au moins dans chaque noeud où doit être effectuée une diffusion locale, un serveur de diffusion associé à une unité de jonction, couplé à un point de raccordement du commutateur du noeud considéré et comportant des listes pré-établies de diffusés locaux, des diffuseurs (E11) pour élaborer des paquets comportant une succession de flèches dont certaines sont des flèches de guidage noeud à noeud et dont d'autres, placées juste après une flèche désignant un noeud où doit se faire une diffusion, désignent le point de raccordement auquel est couplé le serveur du noeud désigné, et comportant, juste après une flèche désignant un point de raccordement, une zone d'instructions destinée à désigner dans ce serveur une des listes pré-établies.

3. Dispositif selon la revendication 2, caractérisé en ce que l'unité de jonction et le serveur relatifs à un des noeuds sont couplés à deux points de raccordement distincts du commutateur du noeud (figures 4, 5).

4. Dispositif selon la revendication 2, caractérisé en ce que le serveur relatif à un des noeuds est intégré à l'unité de jonction relative à ce noeud (figures 8 et 9).

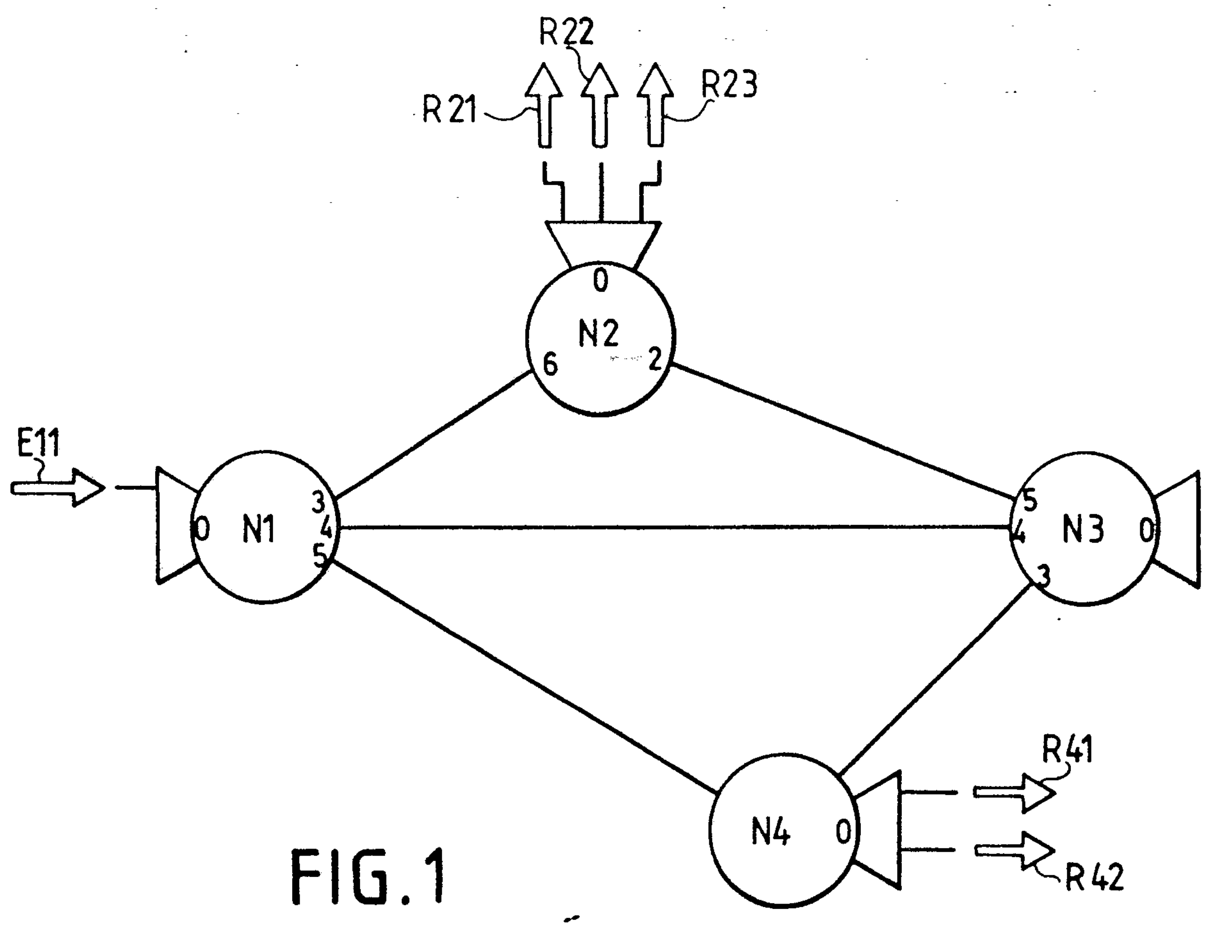
R22
R21
R23
0
N2
6
2
E11
3
0
N1
4
5
5
4
N3
0
3
R41
N4
0
R42

FIG.1

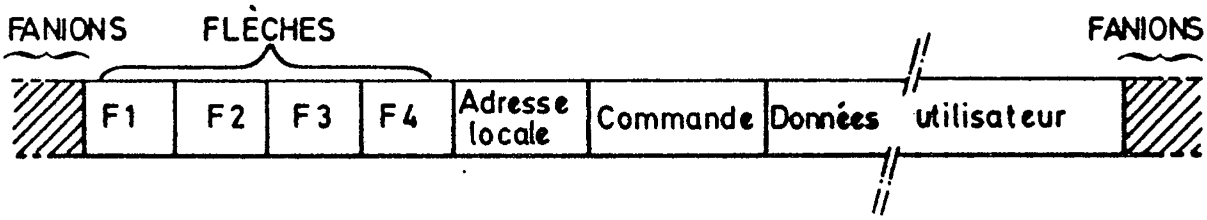
FANIONS
FLÈCHES
FANIONS
F1
F2
F3
F4
Adresse locale
Commande
Données
utilisateur

FIG.2

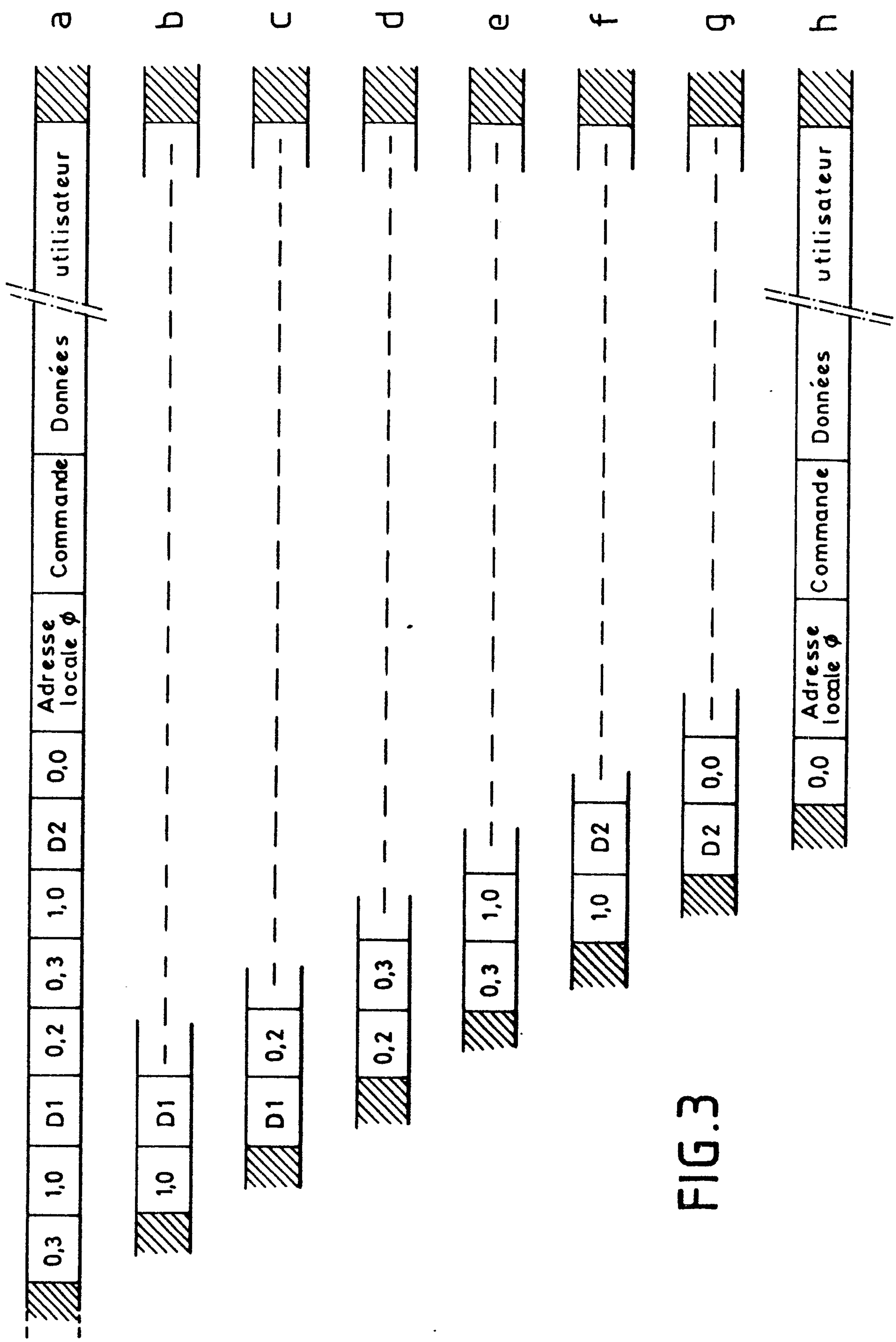
a
b
c
d
e
f
g
h
utilisateur
Données
Commande
Adresse locale φ
0,0
D2
1,0
0,3
0,2
D1

FIG.3

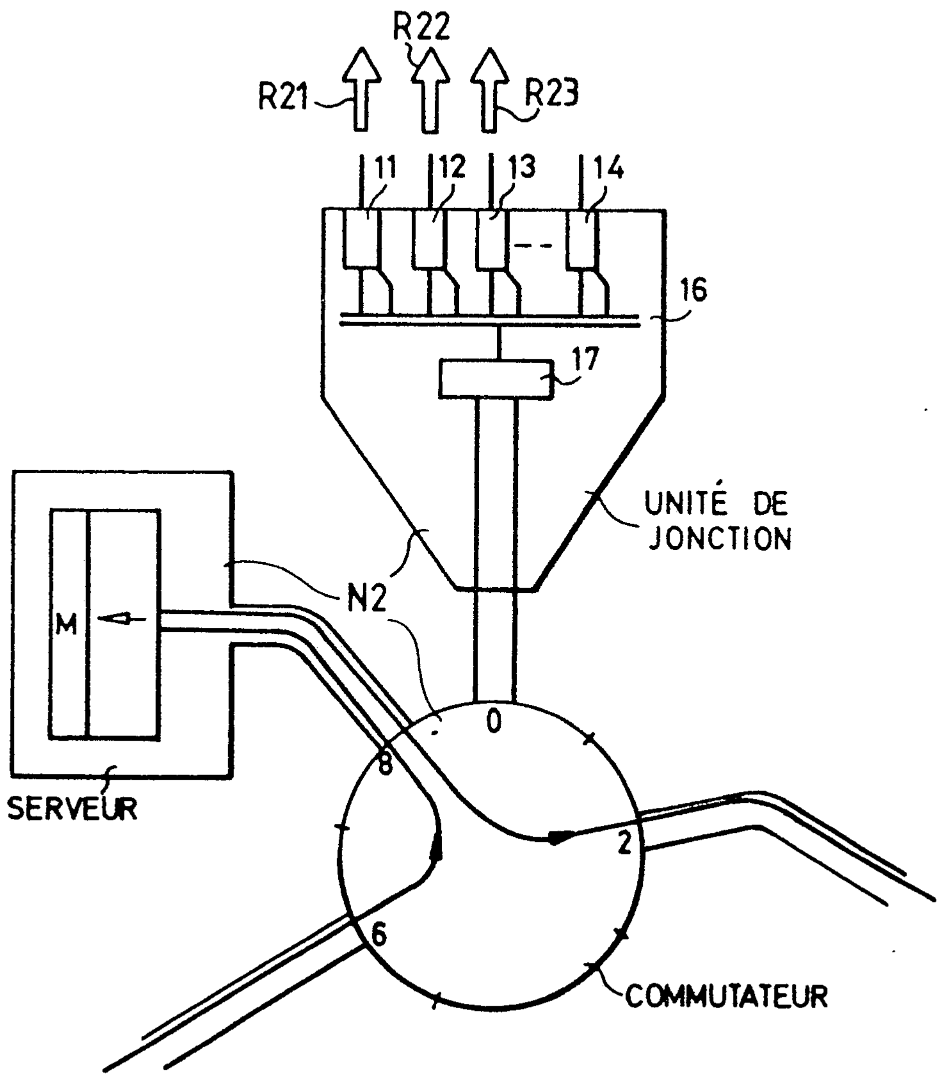
R21
R22
R23
11
12
13
14
16
17
UNITÉ DE
JONCTION
M
N2
SERVEUR
0
8
2
6
COMMUTATEUR

FIG. 4

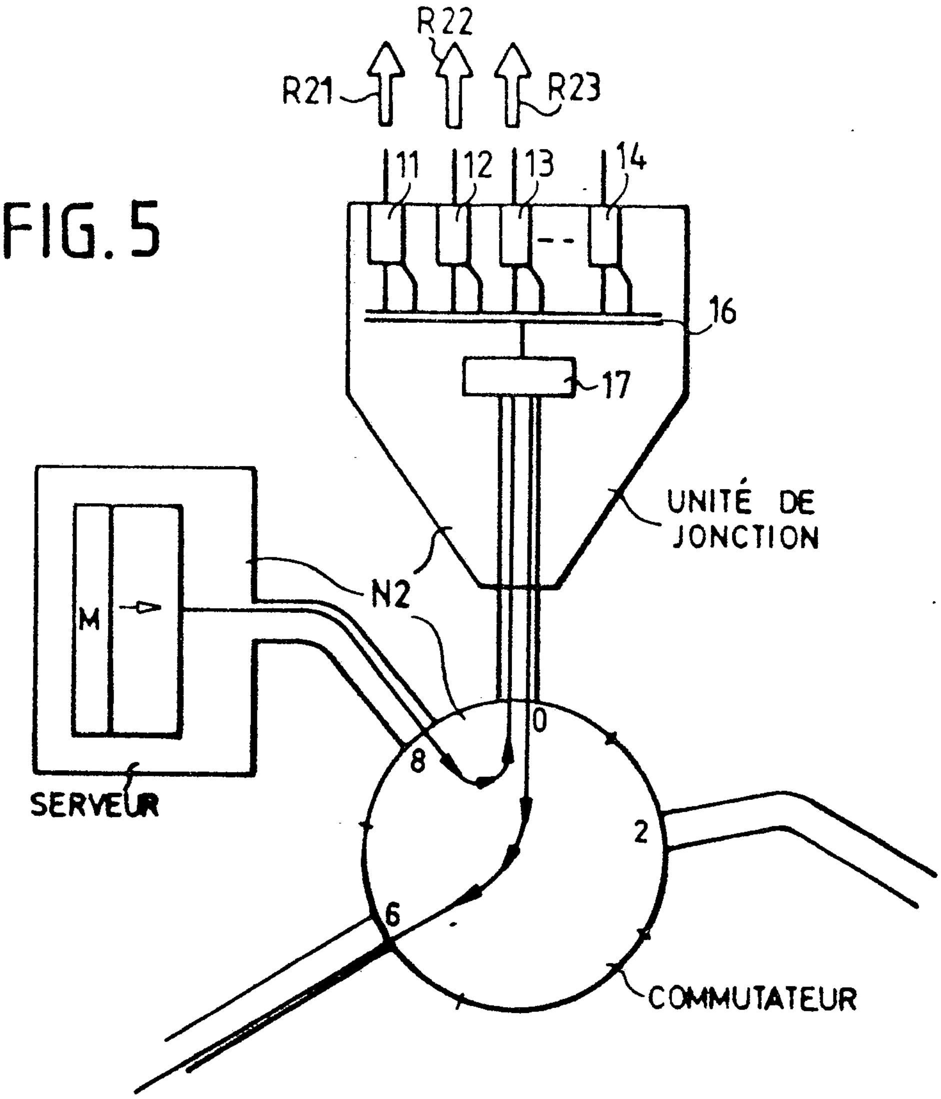
R21
R22
R23
11
12
13
14
16
17
UNITÉ DE JONCTION
N2
M
SERVEUR
0
8
2
6
COMMUTATEUR

FIG. 5

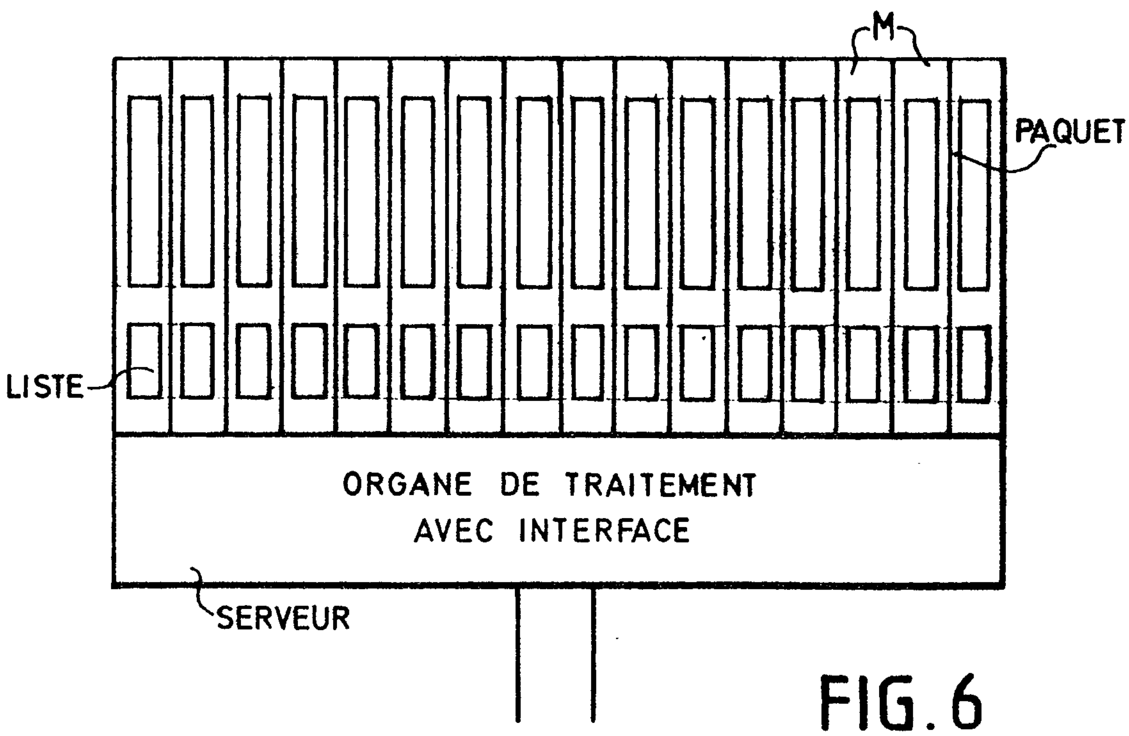
M
PAQUET
LISTE
ORGANE DE TRAITEMENT AVEC INTERFACE
SERVEUR

FIG. 6

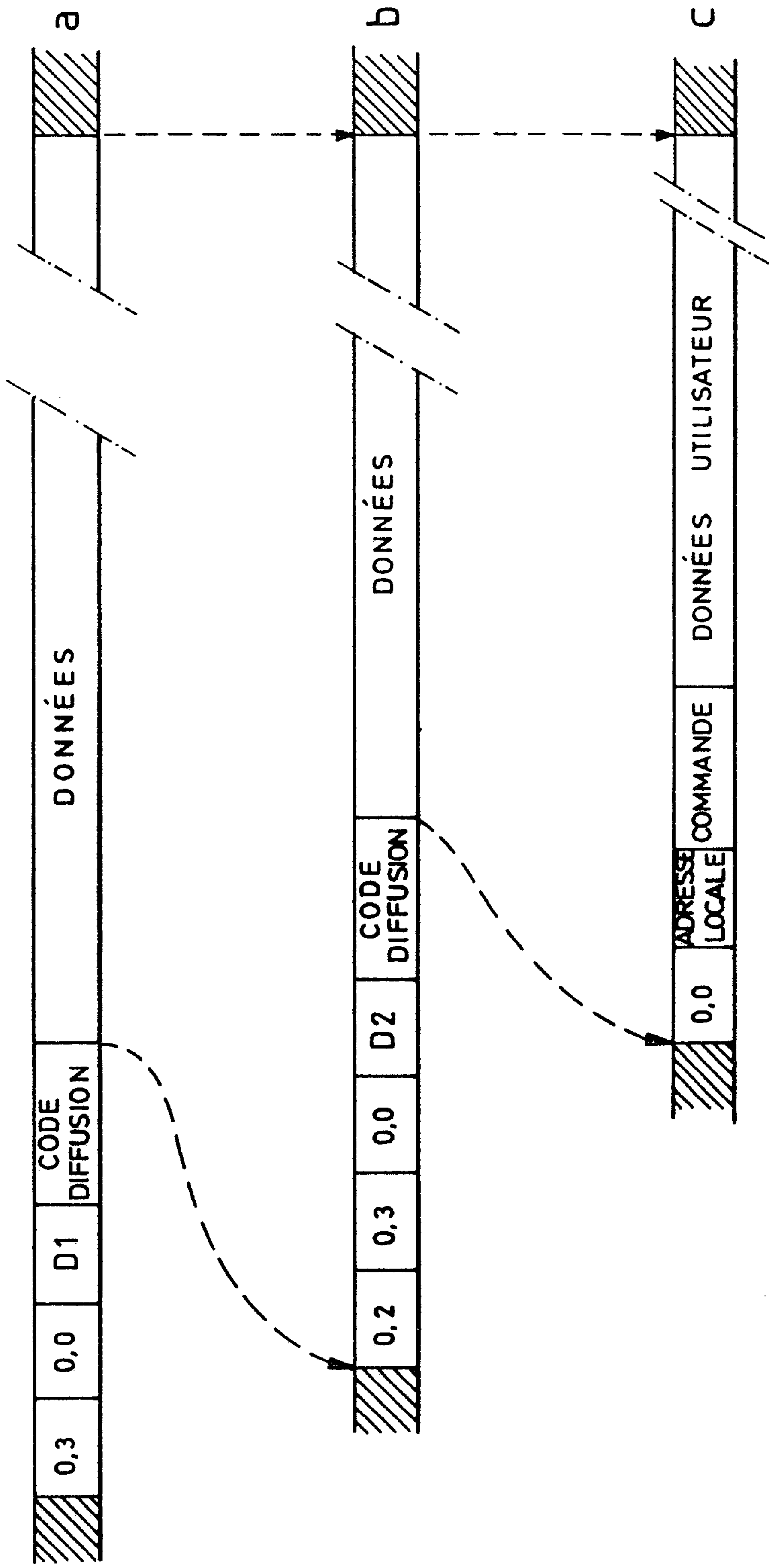
a
0,3
0,0
D1
CODE DIFFUSION
DONNÉES
b
0,2
0,3
0,0
D2
CODE DIFFUSION
DONNÉES
c
0,0
ADRESSE LOCALE
COMMANDE
DONNÉES UTILISATEUR

FIG.7

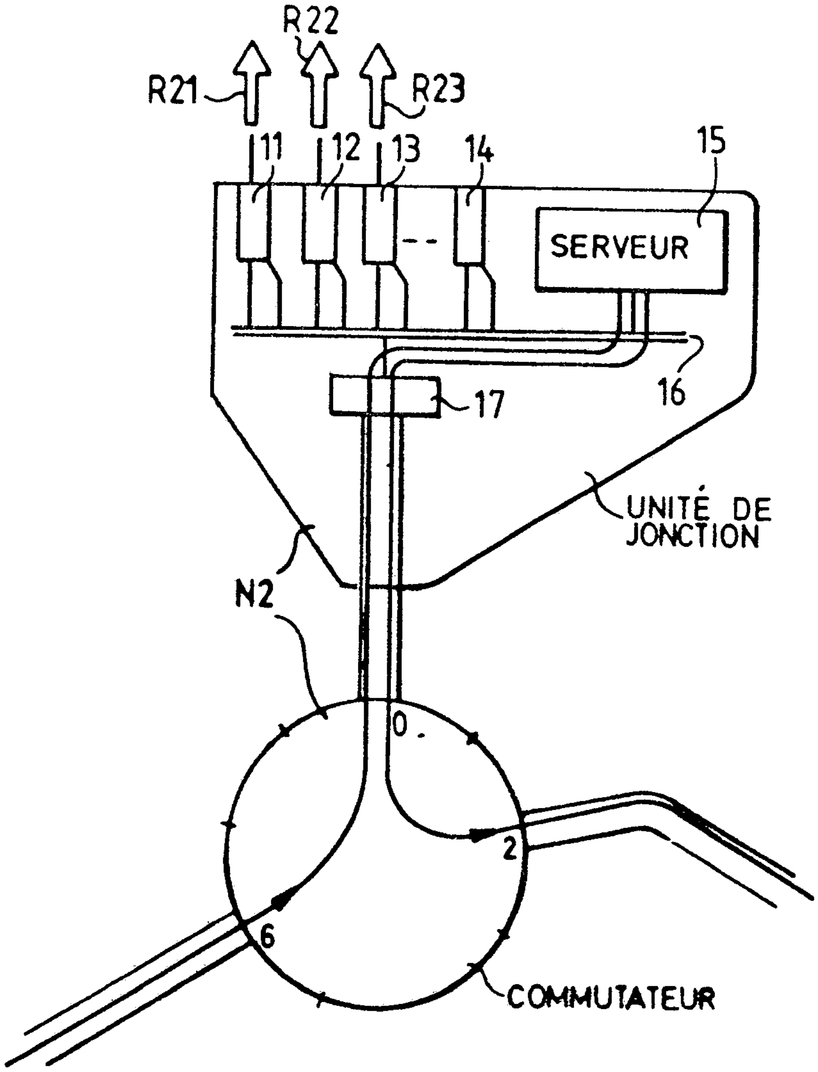
R22
R21
R23
11
12
13
14
15
SERVEUR
16
17
UNITÉ DE JONCTION
N2
0
2
6
COMMUTATEUR

FIG.8

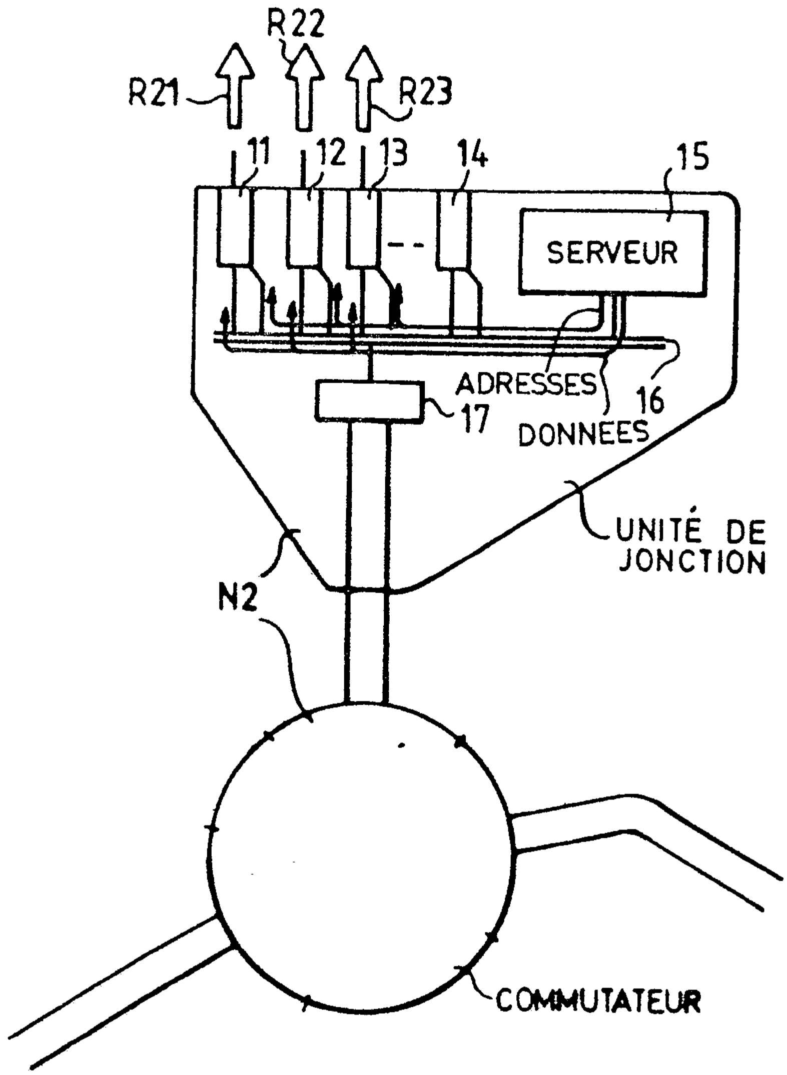
R21
R22
R23
11
12
13
14
15
SERVEUR
ADRESSES
16
17
DONNEES
UNITÉ DE
JONCTION
N2
COMMUTATEUR

FIG.9

Office européen des brevets

# RAPPORT DE RECHERCHE EUROPEENNE

Numero de la demande

EP 89 40 0012

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PROCEEDINGS OF THE NINTH DATA COMMUNICATIONS SYMPOSIUM, 10-13 septembre 1985, Whistler Mountain, British Columbia, pages 172-178, IEEE, New York, US; D.R. CHERITON et al.: "Host groups: A multicast extension for datagram internetworks"<br>* Page 172, colonne de gauche, lignes 13-18; page 172, colonne de droite, lignes 45-47; page 173, colonne de droite, lignes 35-52; page 175, colonne de gauche, ligne 51 - colonne de droite, ligne 17 * | 1,2 | H 04 L 11/18 |
| A | FR-A-2 093 211 (C.G.C.T.)<br>* Page 2, lignes 3-14; page 3, lignes 9-38 * | 1 | |
| A | EP-A-0 006 798 (THOMSON-CSF)<br>* Page 2, lignes 19-28; page 6, lignes 23-34 * | 1 | |
| | | | **DOMAINES TECHNIQUES RECHERCHES (Int. Cl.4)** |
| | | | H 04 L |

Le présent rapport a été établi pour toutes les revendications

| Lieu de la recherche | Date d'achèvement de la recherche | Examinateur |
|---|---|---|
| LA HAYE | 31-03-1989 | DE LA FUENTE DEL AGUA P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant